# FASCICULE DE BREVET EUROPEEN

(11) **EP 4 076 921 B1**
(45) Date de publication et mention de la délivrance du brevet: **29.11.2023**
(21) Numéro de dépôt: 20848802.3
(22) Date de dépôt: 17.12.2020
(51) Int. Cl.: B29D 30/06

(54) **MOULE DE CUISSON POUR PNEUMATIQUES MUNI D'UN DISPOSITIF D'EVENTATION ET PROCEDE DE CUISSON ASSOCIE**
VULKANISIERFORM FÜR REIFEN MIT EINER ENTLÜFTUNGSVORRICHTUNG UND VERFAHREN ZUR VULKANISIERUNG
CURING MOULD FOR TYRES PROVIDED WITH A VENTING DEVICE AND CURING METHOD THEREFOR

(30) Priorité: 19.12.2019 FR 1914886
(43) Date de publication de la demande: 26.10.2022
(73) Titulaire: COMPAGNIE GENERALE DES ETABLISSEMENTS MICHELIN, 63040 Clermont-Ferrand (FR)
(72) Inventeur: MAES, Laurent, 63040 Clermont-Ferrand CEDEX 9 (FR)
(74) Mandataire: M.F.P. Michelin
(86) Numéro de dépôt international: PCT/FR2020/052496
(87) Numéro de publication internationale: WO 2021/123634

(56) Documents cités:
- FR-A- 1 553 264
- JP-A- 2004 262 285
- KR-A- 20100 052 940

## Description

L'invention se situe dans le domaine des moules de cuisson pour pneumatiques, et concerne plus particulièrement un procédé de cuisson pour pneumatique utilisant un moule de cuisson muni d'un dispositif d'éventation, et un procédé de fabrication d'un tel moule.

La fabrication d'un pneumatique comprend une étape de cuisson pendant laquelle une ébauche de pneumatique est moulée et vulcanisée pour donner au pneumatique ses caractéristiques et son aspect final. La cuisson d'un pneumatique s'effectue dans un moule de cuisson. Un moule de cuisson définit, dans une position de fermeture du moule, une surface de moulage formée, en particulier, d'une garniture, destinée à mouler la bande de roulement du pneumatique, et de deux coquilles, destinées à mouler les flancs du pneumatique.

La forme externe de la bande de roulement d'un pneumatique, également appelée « sculpture » du pneumatique, comprend généralement des reliefs en creux ou en protubérance, tels des sillons s'étendant transversalement ou circonférentiellement sur la bande de roulement, des parallélépipèdes aussi appelés « pains », ou des entailles s'étendant depuis la surface radialement la plus extérieure d'un pain vers l'intérieur dudit pain. Par ailleurs, certaines sculptures sont dites « fortement entaillées » de telle manière qu'un même pain peut comporter plusieurs entailles afin, notamment, d'apporter plus de souplesse à la bande de roulement du pneumatique.

La surface de moulage du moule correspond en négatif à la sculpture du pneumatique. Ainsi, un élément de garniture est généralement composé de fines lamelles aptes à mouler les entailles, et d'un corps surmoulé autour d'une partie d'ancrage des lamelles, apte à mouler les formes plus grossières de la sculpture.

Lors de l'étape de cuisson, l'ébauche de pneumatique est pressée contre la garniture de telle manière que la gomme de caoutchouc crue composant l'ébauche pénètre dans les cavités de la garniture. Une poche d'air est ainsi formée entre la gomme de l'ébauche et certaines zones d'une cavité, appelées « zones de dernier moulage ». Les zones de dernier moulage sont généralement situées sur une paroi de fond ou sur une paroi latérale d'une cavité, ou encore, dans les parties anguleuses d'une cavité. Les parties anguleuses sont particulièrement difficiles à mouler, et requièrent des pressions de moulage élevées.

Afin de faciliter le moulage des zones de dernier moulage et éviter l'apparition de défauts de moulage sur le pneumatique vulcanisé dits de « non-venues » de gomme, des évents consistants en des perçages sont généralement pratiqués dans le corps des éléments de garniture, à hauteur desdites parties. Les évents permettent l'évacuation de l'air pendant le moulage de l'ébauche puis, pendant sa vulcanisation. Sous l'effet de la pression exercée sur l'ébauche lors du moulage, la gomme de caoutchouc crue pénètre dans ces perçages et forme sur le pneumatique une protubérance appelée « tétine », considérée comme inesthétique.

Un inconvénient bien connu de l'état de la technique est que le moulage de pains comportant plusieurs entailles nécessite un grand nombre d'évents, compte tenu des nombreuses parties anguleuses situées dans les cavités servant au moulage desdits pains. Afin de limiter le nombre d'évents, on connait de la demande FR1553264 une lamelle dont la partie utile au moulage d'une entaille comporte un perçage permettant à l'air de circuler d'une partie anguleuse, non reliée à un évent, à une autre, reliée à un évent. Ledit perçage est situé dans le voisinage de la partie d'ancrage de la lamelle et fait au moins 1 mm de diamètre. Lors du moulage du pneumatique, une jonction de gomme de caoutchouc crue est formée au travers du perçage, puis vulcanisée. Lors du démoulage du pneumatique, ladite jonction est ensuite découpée par la lamelle s'extrayant de l'entaille.

Toutefois, l'évacuation de l'air n'est pas assurée de manière satisfaisante. De plus, les perçages fragilisent la lamelle et contraignent leur conception, ce qui limite la marge de manoeuvre des concepteurs et, par conséquent, les performances du pneumatique. Enfin, les parties de la bande de roulement résultant du sectionnage, voire de l'arrachage, des jonctions constituent des points faibles, telles des amorces de déchirures, qui réduisent la performance du pneumatique.

Un objectif de l'invention est de remédier aux inconvénients précités et d'apporter une solution originale pour améliorer le moulage des pneumatiques, tout en leur assurant un niveau de performance élevée.

A cette fin, l'invention propose un procédé de cuisson d'un pneumatique au cours duquel on vient presser une ébauche de pneumatique contre la garniture d'un moule de cuisson muni d'un dispositif d'éventation, la surface de moulage de ladite garniture formant des protubérances qui délimitent des cavités, le dispositif d'éventation comprenant des évents qui traversent la garniture, au moins une cavité étant compartimentée en chambres par au moins une protubérance en forme de lamelle, chaque cavité se refermant sur un ou plusieurs évents, au moins une desdites chambres ne se refermant pas sur un évent, la lamelle étant traversée par au moins un conduit de telle manière que la ou les chambres ne se refermant pas sur un évent communiquent par le conduit avec une chambre se refermant sur un évent.

Selon l'invention, la section transversale du conduit a une surface allant de 0,0001 mm² à 0,25 mm² et, plus préférentiellement, de 0,01 mm² à 0.1 mm².

Ainsi, la section transversale du conduit a une surface restreinte. Il en va de même pour la jonction de gomme de caoutchouc crue, formée au travers du conduit lors de l'étape de vulcanisation.

Par conséquent, ladite jonction est plus facile à sectionner que la jonction formée par le conduit de l'état de la technique. De plus, les parties de la bande de roulement résultant du sectionnage du conduit sont d'étendues restreintes et, par conséquent, ne fragilisent pas la bande de roulement. La performance du pneumatique est donc améliorée.

Ensuite, ladite surface restreinte permet au conduit d'être positionné au plus près des parties anguleuses desquelles l'air doit être évacué, par opposition au conduit de l'état de la technique dont la forme circulaire et les dimensions accrues ne permettent pas de réduire complètement le volume de la poche d'air formée entre la partie anguleuse du moule et l'ébauche de pneumatique.

Enfin, les conduits de section transversale réduite fragilisent moins la lamelle. Les moyens de renfort de la lamelle tels les raidisseurs peuvent donc être limités en étendue et/ou en épaisseur. La lamelle ainsi limitée est donc plus fine. Il en va de même pour l'entaille moulée par la lamelle. Des entailles plus fines permettent d'optimiser certaines performances du pneumatique telle la rigidité.

De préférence, la lamelle comporte une partie de moulage sur laquelle plusieurs conduits sont disposés et distants de 0,01 mm à 2 mm et, plus préférentiellement, de 0,1 mm à 0,5 mm.

La réalisation d'un regroupement de conduits en « chapelet » ou en « grappe » dense permet d'optimiser l'efficacité de la circulation de l'air entre les chambres sans fragiliser la lamelle.

Avantageusement, les conduits sont disposés de manière sécante, ou adjacente, ou distante au plus de 5 mm et, plus préférentiellement, de 2 mm, par rapport à un contour définissant l'intersection entre la lamelle et la surface radialement la plus extérieure de la cavité.

Ainsi, la proximité d'un conduit avec ledit contour permet d'optimiser l'efficacité du dispositif d'éventation en permettant au conduit d'évacuer de l'air le plus longtemps possible ou, autrement dit, jusqu'à la réduction complète des poches d'air emprisonnées dans les parties anguleuses des chambres.

De préférence, la lamelle comporte une partie d'ancrage, immergée dans le corps de la garniture, sur laquelle les conduits sont disposés de manière adjacente ou distante au plus de 2 mm, par rapport à un contour définissant l'intersection entre la lamelle et la surface radialement la plus extérieure de la cavité.

Ainsi, les conduits peuvent continuer à évacuer de l'air même lorsqu'une poche d'air emprisonnée dans une partie anguleuse d'une chambre est totalement réduite.

Avantageusement, la lamelle comporte un raidisseur le long d'un contour définissant l'intersection entre la lamelle et la surface radialement la plus extérieure de la cavité, de hauteur allant jusqu'à 2 mm, et, de préférence, de 0,6 à 1,4 mm.

Les raidisseurs peuvent donc être limités en étendue et/ou en épaisseur. La lamelle ainsi limitée est donc plus fine. Il en va de même pour l'entaille moulée par la lamelle. Des entailles plus fines permettent d'optimiser certaines performances du pneumatique telle la rigidité.

De préférence, les conduits sont distants au plus de 5 mm et, de préférence, de 2 mm, des parties anguleuses d'une chambre. Une telle disposition des conduits permet d'optimiser l'évacuation de l'air.

L'invention a également pour objet un pneumatique destiné à être monté sur la jante d'une roue caractérisé en ce qu'il est obtenu par un procédé de cuisson d'un pneumatique selon l'invention, ledit pneumatique présentant sur la surface externe de sa bande de roulement des protubérances qui prennent la forme de tétines correspondant aux empreintes en négatif respectives des conduits, et ayant, de préférence, une hauteur égale ou supérieure à 0,02 mm.

L'invention a également pour objet un procédé de fabrication d'un moule de cuisson d'un pneumatique selon l'invention, dans lequel :
- on fabrique la lamelle à l'aide d'un procédé ou d'une combinaison de procédés choisi parmi le groupe suivant : l'enlèvement de matière telle découpage laser, la déformation plastique tel l'emboutissage, ou la fabrication additive telle la consolidation par fusion sélective, puis
- on réalise le ou les conduits au moyen d'un procédé de perçage laser, et
- on assemble la lamelle avec le corps de la garniture.

Selon une variante de réalisation :
- simultanément, on fabrique la lamelle et on réalise le ou les conduits au moyen d'un procédé de fabrication additive, puis
- on assemble la lamelle avec le corps de la garniture.

Selon une variante de réalisation, simultanément, on fabrique le corps d'un élément de garniture, on fabrique la lamelle, et on réalise le ou les orifices au moyen d'un procédé de fabrication additive.

L'invention sera mieux comprise grâce à la suite de la description, qui s'appuie sur les figures suivantes :
- la figure 1 est une vue en coupe radiale de certains éléments d'un moule de cuisson selon l'invention ;
- la figure 2 est une vue en perspective d'une partie de la surface de moulage de la garniture du moule de cuisson de la figure 1 ;
- la figure 3 est une vue de face de certains éléments de la garniture de la figure 2 ;
- la figure 4 est une vue de coté de certains éléments de la garniture de la figure 2 ;
- la figure 5 est un vue de face d'une lamelle de la figure 2.

Sur les différentes figures, les éléments identiques ou similaires portent la même référence. Leur description n'est donc pas systématiquement reprise.

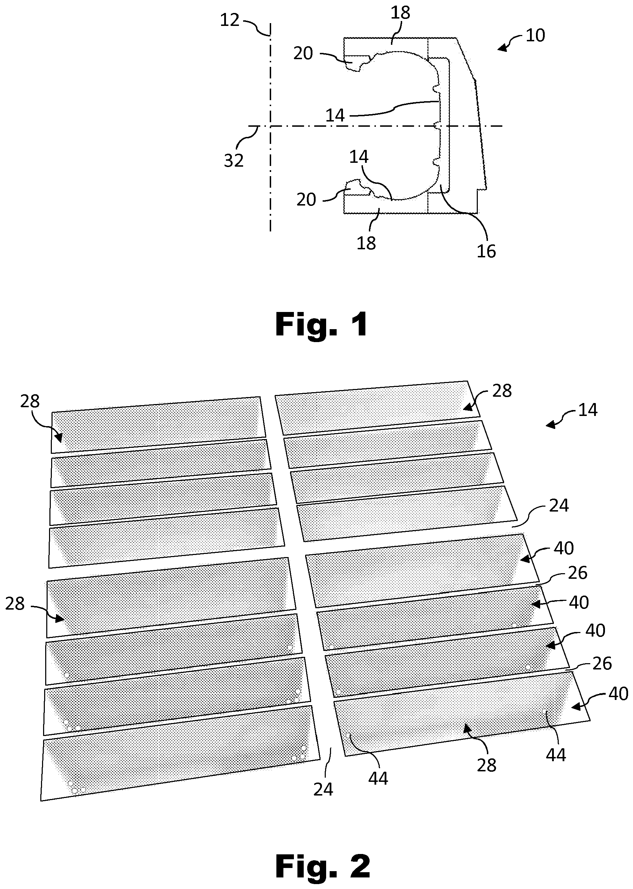

On a illustré à la figure 1 de manière schématique un moule de cuisson 10 d'un pneumatique servant à mouler et à vulcaniser une ébauche de pneumatique, en vue d'obtenir un pneumatique de géométrie et d'aspect voulu. Le moule délimite un espace intérieur généralement symétrique par révolution d'axe central 12. Le moule de cuisson comprend un bâti, des éléments de moulage, des moyens de vulcanisation, et des moyens d'ouverture et de fermeture du moule. Les moyens d'ouverture et de fermeture sont aptes à mettre en mouvement les éléments de moulage entre une position d'ouverture et une position de fermeture. La position d'ouverture correspond à l'étape d'extraction d'un pneumatique moulé et vulcanisé, ainsi qu'à l'étape d'introduction d'une nouvelle ébauche de pneumatique. La position de fermeture (figure 1) correspond à l'étape de moulage et de vulcanisation de l'ébauche de pneumatique. Les moyens de vulcanisation sont aptes à fournir l'énergie thermique et la pression nécessaires, respectivement, à la vulcanisation et au moulage de l'ébauche de pneumatique. A titre d'exemple, l'apport en énergie thermique et en pression est assuré par de la vapeur d'eau sous pression circulant autour du moule, et à l'intérieur de l'ébauche de pneumatique dans une membrane extensible. En position de fermeture du moule, les éléments de moulage forment une surface de moulage 14 correspondant en négatif à la surface externe souhaitée du pneumatique. Les éléments de moulage comprennent plus particulièrement une garniture 16 destinée à mouler la bande de roulement du pneumatique, deux coquilles 18 destinées à mouler les flancs du pneumatique, et deux anneaux 20 destinés à mouler les bourrelets du pneumatique.

La figure 2 illustre une partie de la surface de moulage 14 formant des creux ou des protubérances. Les protubérances s'étendent depuis l'extérieur du moule vers l'intérieur du moule. A titre d'exemple, les protubérances prennent la forme de parallélépipèdes, de sillons 24 s'étendant circonférentiellement et/ou transversalement, ou encore, de lamelles 26 ou de picots. Les protubérances 24, 26 délimitent des cavités 28 de forme anguleuse ou arrondie. A titre d'exemple, les cavités prennent des formes prismatiques, ou encore, s'étendent circonférentiellement et/ou transversalement selon une section polygonale. La surface de moulage 14 est circonscrite par un gabarit extérieur de forme sensiblement cylindrique ou torique, appelé « forme sommet ».

Dans toute la suite et sauf indication contraire, une direction axiale ou transversale désigne une direction parallèle à l'axe central 12 ; la direction radiale 32 désigne une direction perpendiculaire à l'axe central et qui, par conséquent, l'intercepte ; la direction circonférentielle désigne une direction perpendiculaire à une direction radiale, et orthogonale à l'axe central.

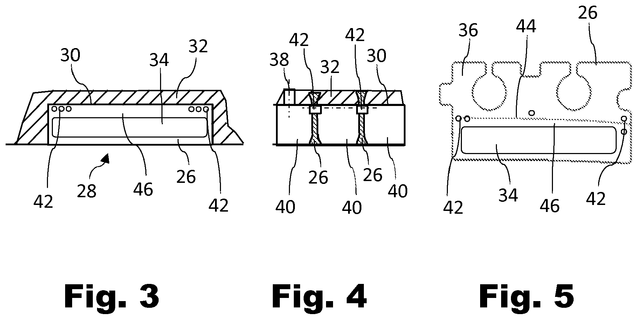

Les figures 3 à 5 illustrent plus particulièrement une cavité 28 comportant au moins une lamelle 26. La cavité 28 se referme sur une paroi de fond 30 radialement la plus extérieure de ladite cavité, et éventuellement tangente avec la forme sommet.

La garniture 16 est divisée en plusieurs éléments de garniture, chaque élément de garniture comportant plusieurs lamelles 26, un corps 32 et d'éventuels inserts. Une lamelle 26 est un élément de moulage fin dont l'épaisseur varie généralement de 0,2 à 2 mm. La lamelle 26 comporte une partie de moulage 34, qui s'étend radialement depuis la paroi de fond 30, et une partie d'ancrage 36 apte à être immergée dans le corps 32 de l'élément de garniture. A titre d'exemples, une lamelle 26 est obtenue par un procédé d'enlèvement de matière tel le découpage laser, de déformation plastique tel l'emboutissage, de fabrication additive telle la consolidation par fusion sélective, ou par une combinaison de ces procédés. De préférence, un élément de garniture est obtenu par un procédé de fonderie par surmoulage du corps 32 de l'élément de garniture autour de la partie d'ancrage 36 des lamelles, ou par fabrication du corps 32 de l'élément de garniture par un procédé de fabrication additive, puis assemblage dudit corps avec les lamelles. L'assemblage des lamelles 26 avec le corps 32 de garniture de manière à réaliser un élément de garniture peut être réalisé par un procédé d'assemblage vissé, par collage, par soudure, ou par tout autre procédé d'assemblage adéquat. Enfin, un élément de garniture peut être obtenu par un procédé de fabrication additive dans lequel le corps 32 de l'élément de garniture et la partie de moulage 34 des lamelles sont réalisés d'un seul tenant.

Le moule de cuisson 10 est muni d'un dispositif d'éventation apte à évacuer l'air emprisonné entre la surface externe de l'ébauche de pneumatique et la surface de moulage 14. A cette fin, le dispositif d'éventation comprend des évents 38 (figure 4) qui traversent la garniture 16, constituant autant de passages pour l'air vers l'extérieur du moule. Chaque cavité 28 se referme sur un ou plusieurs évents. A titre d'exemples, un évent 38 prend la forme d'un perçage, ou encore, du passage résultant du jeu d'assemblage entre une lamelle 26 et le corps 32 d'un élément de garniture.

Au moins une cavité 28 est compartimentée en chambres 40 par au moins une lamelle 26. Par « chambre », on n'entend pas un espace hermétiquement clos formé par la compartimentation des cavités par les lamelles ; on entend un espace dans lequel de l'air est susceptible d'être emprisonné entre la gomme pénétrant dans la chambre, et les zones de dernier moulage de la chambre et, plus particulièrement, les parties anguleuses de la chambre. Par « partie anguleuse », on entend que les parois composant la chambre ou la cavité forment des intersections dont le rayon d'arrondi ou le chanfrein est inférieur à 5 mm.

Au moins une desdites chambres 40 ne se referme pas sur un évent 38, empêchant ainsi l'air d'une poche d'être évacué vers l'extérieur du moule 10. La lamelle 26 est traversée par au moins un conduit 42 de telle manière que la chambre ne se refermant pas sur un évent 38, communique par le conduit 42 avec une chambre se refermant sur un évent 38. Ainsi, l'air peut circuler depuis une poche d'air située dans une chambre non éventée, jusqu'à une chambre éventée. A titre d'exemple, une cavité 28 peut être compartimentée en une série de chambres 40, toutes les chambres communiquant entre elles selon un réseau donné au moyen de conduits 42, le nombre de chambre éventée étant supérieur ou égal à 1, et strictement inférieur au nombre de chambre total de la cavité 28.

Selon l'invention, la section transversale d'un conduit 28 a une surface allant de 0,0001 mm² à 0,25 mm² et, plus préférentiellement, de 0,01 mm² à 0.1 mm². Ainsi, la section d'un conduit est restreinte et fragilise moins la lamelle. La lamelle comporte plusieurs conduits 42 disposés selon un alignement ou tout autre agencement adéquat, et les conduits sont distants les uns des autres de 0,01 mm à 2 mm et, plus préférentiellement, de 0,1 mm à 0,5 mm. La densité des conduits va jusqu'à 100 conduits par mm² et, plus préférentiellement, jusqu'à 25. Les conduits sont disposés de manière sécante, ou adjacente, ou encore, distante au plus de 5 mm et, plus préférentiellement, de 2 mm, par rapport à un contour 44 définissant l'intersection entre la partie de moulage 34 de la lamelle et la paroi de fond 30 desdites cavités. Les conduits 42 sont adjacents ou distants au plus de 5 mm et, plus préférentiellement, au plus de 2 mm, des zones de dernier moulage et, en particulier, des parties anguleuses d'une chambre 40.

Selon une variante de réalisation, lorsque la lamelle 26 est réalisée distinctement du corps 32 de l'élément de garniture, les conduits 42 sont disposés sur la partie d'ancrage 36 de la lamelle, de manière adjacente ou distante au plus de 2 mm, par rapport au contour 44.

La lamelle 26 comporte un raidisseur le long du contour 44 de hauteur, suivant l'extension de la lamelle vers l'intérieur du moule, allant jusqu'à 2 mm, et, de préférence, de 0,6 à 1,4 mm. Par « raidisseur », on entend une surépaisseur balayant le contour de la partie de moulage 34 permettant à la lamelle de ne pas se déformer élastiquement ou plastiquement lors de l'étape de moulage ou lors de l'étape de démoulage.

A titre d'exemples, la section axiale d'un conduit a un contour circulaire de diamètre allant de 0,01 mm à 0,5 mm et, plus préférentiellement, de 0,05 mm à 0,3 mm ; un contour polygonal, par exemple triangulaire, de base ou de hauteur allant de 0,1 à 0,7 mm et d'arrondi aux sommets de rayon allant de 0,01 mm à 0,2 mm ; un contour en forme de fente de largeur allant de 0,1 à 0,3 mm.

A l'exemple illustré à la figure 3, la lamelle est traversée de conduits 42, disposés selon un alignement, sur la partie de moulage 34 de la lamelle. A l'exemple illustré à la figure 5, un conduit 42 est adjacent au contour 44. Les conduits ont une section de forme circulaire de diamètre égal à 0,2 mm, et les conduits sont espacés au moins de 0,2 mm.

Selon une première variante de réalisation, lors de la fabrication d'un moule de cuisson selon l'invention, on fabrique une lamelle 26 à l'aide d'un procédé ou d'une combinaison de procédés choisi parmi le groupe suivant : l'enlèvement de matière telle découpage laser, la déformation plastique tel l'emboutissage, ou la fabrication additive et, plus préférentiellement, la consolidation sélective par fusion. Puis, on réalise le ou les conduits 42 au moyen d'un procédé de perçage laser. Un procédé de perçage laser convient particulièrement à la réalisation de conduits 42 de section axiale ayant un contour circulaire de diamètre allant de 0,05 mm à 0,3 mm, au travers d'une lamelle fine d'épaisseur comprise entre 0,2 mm et 2 mm. Ensuite, on assemble la lamelle 26 avec le corps de l'élément de garniture.

Par « fabrication additive », on entend un procédé de fabrication par ajout de matière.

Par « consolidation sélective par fusion », on entend un procédé de fabrication additive visant à agréger ou agglomérer progressivement et sélectivement, une amenée de matière d'oeuvre entrante de manière à obtenir une matière d'oeuvre sortante. La matière d'oeuvre entrante prend la forme et/ou rentre dans la composition d'une poudre, d'un fil ou d'une solution/bain. La matière d'oeuvre entrante est généralement amenée par dépôt d'une poudre sur un support de manière à former une couche. Le support prend la forme d'un plateau ou d'une couche précédemment agglomérée. L'agglomération est généralement obtenue par solidification de la matière d'oeuvre entrante qui est entrée en fusion totale ou partielle (frittage) par un apport localisé ou généralisé d'énergie, puis refroidie. L'apport d'énergie est généralement réalisé par un laser ou par un faisceau d'électrons, bien qu'il puisse être réalisé par induction ou rayonnement infrarouge. Dans le cas du laser et du faisceau d'électrons, la localisation de l'apport d'énergie est obtenue par des moyens d'orientation de l'apport d'énergie comme, respectivement, des moyens optiques ou électromagnétiques. Le procédé confère à la matière d'oeuvre entrante une forme et des caractéristiques mécaniques prédéterminées. Ladite forme et lesdites caractéristiques sont fonctions du matériau de la matière d'oeuvre entrante et de paramètres du procédé. Ladite forme est généralement un solide monobloc, bien qu'elle puisse être constituée de plusieurs solides monoblocs.

Selon une deuxième variante de réalisation, simultanément, on fabrique la lamelle 26, et on réalise le ou les conduits 42 par un procédé de fabrication additive. Un procédé de fabrication additive convient particulièrement à la réalisation de conduits 42 de section axiale ayant un contour circulaire de diamètre allant de 0,01 mm à 0,5 mm. Puis, on assemble la lamelle 26 avec le corps 32 de l'élément de garniture.

Selon une troisième variante de réalisation, on fabrique d'un seul tenant le corps 32 d'un élément de garniture, la partie de moulage 34 de la ou des lamelles, et le ou les conduits 42, au moyen d'un procédé de fabrication additive.

D'autres variantes et modes de réalisation de l'invention peuvent être envisagés sans sortir du cadre de ces revendications.

## Revendications

1. Procédé de cuisson d'un pneumatique au cours duquel on vient presser une ébauche de pneumatique contre la garniture (16) d'un moule de cuisson (10) muni d'un dispositif d'éventation,
la surface de moulage (14) de ladite garniture formant des protubérances qui délimitent des cavités (28),
le dispositif d'éventation comprenant des évents (38) qui traversent la garniture,
au moins une cavité (28) étant compartimentée en chambres par au moins une protubérance en forme de lamelle (26),
chaque cavité (28) se refermant sur un ou plusieurs évents (38),
au moins une desdites chambres (40) ne se refermant pas sur un évent,
**caractérisé en ce que** la lamelle (26) étant traversée par au moins un conduit (42) de telle manière que la ou les chambres (40) ne se refermant pas sur un évent (38) communiquent par le conduit (42) avec une chambre (40) se refermant sur un évent (38),
**et en ce que** la section transversale du conduit (42) a une surface allant de 0,0001 mm² à 0,25 mm² et, plus préférentiellement, de 0,01 mm² à 0.1 mm².

2. Procédé selon la revendication précédente, dans lequel la lamelle (26) comporte une partie de moulage (34) sur laquelle plusieurs conduits (42) sont disposés et distants de 0,01 mm à 2 mm et, plus préférentiellement, de 0,1 mm à 0,5 mm.

3. Procédé selon l'une des revendications 1 ou 2, dans lequel les conduits (42) sont disposés de manière sécante, ou adjacente, ou distante au plus de 5 mm et, plus préférentiellement, de 2 mm, par rapport à un contour (44) définissant l'intersection entre la lamelle (26) et la surface radialement la plus extérieure (30) de la cavité (28).

4. Procédé selon l'une des revendications 1 ou 2, dans lequel la lamelle (26) comporte une partie d'ancrage (36), immergée dans le corps (32) de la garniture (16), sur laquelle les conduits (42) sont disposés de manière adjacente ou distante au plus de 2 mm, par rapport à un contour (44) définissant l'intersection entre la lamelle (26) et la surface radialement la plus extérieure (30) de la cavité (28).

5. Procédé selon l'une des revendications précédentes dans lequel la lamelle (26) comporte un raidisseur (46) le long d'un contour (44) définissant l'intersection entre la lamelle (26) et la surface radialement la plus extérieure (30) de la cavité (28), de hauteur allant jusqu'à 2 mm, et, de préférence, de 0,6 à 1,4 mm.

6. Procédé de cuisson selon l'une des revendications précédentes dans lequel la section axiale d'un conduit (42) a un contour circulaire de diamètre allant de 0,01 mm à 0,5 mm et, plus préférentiellement, de 0,05 mm à 0,3 mm.

7. Procédé de cuisson selon l'une des revendications 1 à 6 dans lequel la section axiale d'un conduit (42) a un contour triangulaire de base ou de hauteur allant de 0,1 à 0,7 mm.

8. Procédé de cuisson selon l'une des revendications 1 à 6 dans lequel la section axiale d'un conduit a un contour en forme de fente de largeur allant de 0,1 à 0,3 mm.

9. Procédé de cuisson selon l'une des revendications précédentes dans lequel les conduits (42) sont distants au plus de 5 mm et, de préférence, de 2 mm, des parties anguleuses d'une chambre.

10. Moule de cuisson (10) d'un pneumatique muni d'un dispositif d'éventation, mis en oeuvre dans un procédé de cuisson d'un pneumatique selon l'une des revendications 1 à 8, comprenant une garniture (16),
la surface de moulage (14) de ladite garniture formant des protubérances qui délimitent des cavités (26),
ladite garniture étant traversée d'évents (38), chaque cavité (26) se refermant sur un ou plusieurs évents (38),
une cavité (26) étant compartimentée en plusieurs chambres (40) par au moins une protubérance en forme de lamelle (26), au moins une desdites chambres (40) ne se refermant pas sur un évent (36),
la lamelle (26) étant traversée par au moins un conduit (42) de telle manière que la chambre (40) ne se refermant pas sur un évent (38) communique par le conduit (42) avec une chambre (40) se refermant sur un évent (38),
**caractérisé en ce que** la section transversale du conduit (42) a une surface allant de 0,0001 mm² à 0,25 mm² et, plus préférentiellement, de 0,01 mm² à 0.1 mm².

11. Procédé de fabrication d'un moule de cuisson (10) d'un pneumatique selon la revendication 10, dans lequel :
- on fabrique la lamelle (26) à l'aide d'un procédé ou d'une combinaison de procédés choisi parmi le groupe suivant : l'enlèvement de matière telle découpage laser, la déformation plastique tel l'emboutissage, ou la fabrication additive telle la consolidation par fusion sélective, puis
- on réalise le ou les conduits (42) au moyen d'un procédé de perçage laser, et
- on assemble la lamelle (26) avec le corps (32) de la garniture (16).

12. Procédé de fabrication d'un moule de cuisson (10) d'un pneumatique selon la revendication 10, dans lequel :
- simultanément, on fabrique la lamelle (26) et on réalise le ou les conduits (42) au moyen d'un procédé de fabrication additive, puis
- on assemble la lamelle (26) avec le corps (32) de la garniture (16).

13. Procédé de fabrication d'un moule de cuisson (10) d'un pneumatique selon la revendication 10, dans lequel, simultanément, on fabrique le corps (32) d'un élément de garniture, on fabrique la lamelle (26), et on réalise le ou les orifices (42) au moyen d'un procédé de fabrication additive.

## Patentansprüche

1. Verfahren zur Vulkanisierung eines Reifens, bei welchem ein Reifenrohling gegen den Formeinsatz (16) einer Vulkanisierform (10) gepresst wird, die mit einer Entlüftungsvorrichtung ausgestattet ist,
wobei die Formfläche (14) des Formeinsatzes Erhebungen bildet, welche Hohlräume (28) begrenzen,
wobei die Entlüftungsvorrichtung Entlüftungsöffnungen (38) umfasst, welche den Formeinsatz durchqueren,
wobei mindestens ein Hohlraum (28) durch mindestens eine lamellenförmige Erhebung (26) in Kammern aufgeteilt wird,
wobei jeder Hohlraum (28) mit einer oder mehreren Entlüftungsöffnungen (38) abschließt,
wobei mindestens eine der Kammern (40) nicht mit einer Entlüftungsöffnung abschließt,
**dadurch gekennzeichnet, dass** die Lamelle (26) von mindestens einem Kanal (42) durchquert wird, derart, dass die Kammer oder die Kammern (40), die nicht mit einer Entlüftungsöffnung (38) abschließen, durch den Kanal (42) mit einer Kammer (40) in Verbindung stehen, die mit einer Entlüftungsöffnung (38) abschließt,
und dadurch, dass der Querschnitt des Kanals (42) eine Fläche von 0,0001 mm² bis 0,25 mm² und vorzugsweise von 0,01 mm² bis 0,1 mm² aufweist.

2. Verfahren nach dem vorhergehenden Anspruch, wobei die Lamelle (26) einen formgebenden Abschnitt (34) aufweist, an dem mehrere Kanäle (42) angeordnet und um 0,01 mm bis 2 mm und vorzugsweise um 0,1 mm bis 0,5 mm beabstandet sind.

3. Verfahren nach einem der Ansprüche 1 oder 2, wobei die Kanäle (42) bezüglich einer Kontur (44), die den Schnitt zwischen der Lamelle (26) und der radial äußersten Fläche (30) des Hohlraums (28) definiert, sekantenartig oder angrenzend oder um höchstens 5 mm und vorzugsweise höchstens 2 mm beabstandet angeordnet sind.

4. Verfahren nach einem der Ansprüche 1 oder 2, wobei die Lamelle (26) einen in den Körper (32) des Formeinsatzes (16) eingesenkten Verankerungsteil (36) aufweist, an welchem die Kanäle (42) bezüglich einer Kontur (44), die den Schnitt zwischen der Lamelle (26) und der radial äußersten Fläche (30) des Hohlraums (28) definiert, angrenzend oder um höchstens 2 mm beabstandet angeordnet sind.

5. Verfahren nach einem der vorhergehenden Ansprüche, wobei die Lamelle (26) ein Versteifungselement (46) entlang einer Kontur (44), die den Schnitt zwischen der Lamelle (26) und der radial äußersten Fläche (30) des Hohlraums (28) definiert, mit einer Höhe von bis zu 2 mm und vorzugsweise von 0,6 bis 1,4 mm aufweist.

6. Verfahren zur Vulkanisierung nach einem der vorhergehenden Ansprüche, wobei der Axialschnitt eines Kanals (42) eine kreisförmige Kontur mit einem Durchmesser von 0,01 mm bis 0,5 mm und vorzugsweise von 0,05 mm bis 0,3 mm aufweist.

7. Verfahren zur Vulkanisierung nach einem der Ansprüche 1 bis 6, wobei der Axialschnitt eines Kanals (42) eine dreieckige Kontur mit einer Basis oder Höhe von 0,1 bis 0,7 mm aufweist.

8. Verfahren zur Vulkanisierung nach einem der Ansprüche 1 bis 6, wobei der Axialschnitt eines Kanals eine Kontur von der Form eines Schlitzes mit einer Breite von 0,1 bis 0,3 mm aufweist.

9. Verfahren zur Vulkanisierung nach einem der vorhergehenden Ansprüche, wobei die Kanäle (42) um höchstens 5 mm und vorzugsweise 2 mm von den Eckenabschnitten einer Kammer beabstandet sind.

10. Vulkanisierform (10) für einen Reifen, die mit einer Entlüftungsvorrichtung ausgestattet ist, bei einem Verfahren zur Vulkanisierung eines Reifens nach einem der Ansprüche 1 bis 8 eingesetzt wird und einen Formeinsatz (16) umfasst,
wobei die Formfläche (14) des Formeinsatzes Erhebungen bildet, welche Hohlräume (26) begrenzen,
wobei der Formeinsatz von Entlüftungsöffnungen (38) durchquert wird, wobei jeder Hohlraum (26) mit einer oder mehreren Entlüftungsöffnungen (38) abschließt,
wobei ein Hohlraum (26) durch mindestens eine lamellenförmige Erhebung (26) in mehrere Kammern (40) aufgeteilt wird, wobei mindestens eine der Kammern (40) nicht mit einer Entlüftungsöffnung (36) abschließt,
wobei die Lamelle (26) von mindestens einem Kanal (42) durchquert wird, derart, dass die Kammer (40), die nicht mit einer Entlüftungsöffnung (38) abschließt, durch den Kanal (42) mit einer Kammer (40) in Verbindung steht, die mit einer Entlüftungsöffnung (38) abschließt,
**dadurch gekennzeichnet, dass** der Querschnitt des Kanals (42) eine Fläche von 0,0001 mm² bis 0,25 mm² und vorzugsweise von 0,01 mm² bis 0,1 mm² aufweist.

11. Verfahren zur Herstellung einer Vulkanisierform (10) für einen Reifen nach Anspruch 10, wobei:
- die Lamelle (26) mithilfe eines Verfahrens oder einer Kombination von Verfahren aus der folgenden Gruppe hergestellt wird: Materialabtrag, wie etwa Laserschneiden, plastische Verformung, wie etwa Pressen, oder additive Fertigung, wie etwa Verfestigung durch selektives Schmelzen, anschließend
- der Kanal oder die Kanäle (42) mittels eines Laserbohrverfahrens ausgebildet werden, und
- die Lamelle (26) mit dem Körper (32) des Formeinsatzes (16) zusammengefügt wird.

12. Verfahren zur Herstellung einer Vulkanisierform (10) für einen Reifen nach Anspruch 10, wobei:
- mittels eines Verfahrens der additiven Fertigung gleichzeitig die Lamelle (26) hergestellt wird und der Kanal oder die Kanäle (42) ausgebildet werden, anschließend
- die Lamelle (26) mit dem Körper (32) des Formeinsatzes (16) zusammengefügt wird.

13. Verfahren zur Herstellung einer Vulkanisierform (10) für einen Reifen nach Anspruch 10, wobei mittels eines Verfahrens der additiven Fertigung gleichzeitig der Körper (32) eines Formeinsatzelements hergestellt wird, die Lamelle (26) hergestellt wird und die Öffnung oder die Öffnungen (42) ausgebildet werden.

## Claims

1. Method for curing a tyre during which a green tyre is pressed against the lining (16) of a curing mould (10) provided with a venting device,
the moulding surface (14) of said lining forming protrusions that define cavities (28), the venting device comprising vents (38) that pass through the lining,
at least one cavity (28) being divided into chambers by at least one protrusion in the form of a blade (26),
each cavity (28) closing on one or more vents (38),
at least one of said chambers (40) not closing on a vent,
at least one duct (42) passing through the blade (26) so that the chamber(s) (40) that does/do not close on a vent (38) communicate(s) through the duct (42) with a chamber (40) that does close on a vent (38),
**characterized in that** the cross-section of the duct (42) has an area of between 0.0001 mm² and 0.25 mm² and, more preferably, 0.01 mm² and 0.1 mm².

2. Method according to the preceding claim, in which the blade (26) includes a moulding portion (34) on which a plurality of ducts (42) are arranged between 0.01 mm and 2 mm apart, and more preferably between 0.1 mm and 0.5 mm apart.

3. Method according to one of Claims 1 and 2, in which the ducts (42) are arranged secant or adjacent to, or at most 5 mm and, more preferably, 2 mm from a contour (44) defining the intersection between the blade (26) and the radially outermost surface (30) of the cavity (28).

4. Method according to one of Claims 1 and 2, in which the blade (26) includes an anchoring portion (36), submerged in the body (32) of the lining (16), on which the ducts (42) are arranged adjacent to or at most 2 mm from a contour (44) defining the intersection between the blade (26) and the radially outermost surface (30) of the cavity (28).

5. Method according to one of the preceding claims, in which the blade (26) includes a stiffener (46) along a contour (44) defining the intersection between the blade (26) and the radially outermost surface (30) of the cavity (28), having a height of up to 2 mm and, preferably, of 0.6 to 1.4 mm.

6. Curing method according to one of the preceding claims, in which the axial cross-section of a duct (42) has a circular outline having a diameter of between 0.01 mm and 0.5 mm and, more preferably, between 0.05 mm and 0.3 mm.

7. Curing method according to one of Claims 1 to 6, in which the axial cross-section of a duct (42) has a triangular outline having a base or height of between 0.1 and 0.7 mm.

8. Curing method according to one of Claims 1 to 6, in which the axial cross-section of a duct has an outline in the form of a slot having a width of between 0.1 and 0.3 mm.

9. Curing method according to one of the preceding claims, in which the ducts (42) are at most 5 mm and, preferably, 2 mm from the angular portions of a chamber.

10. Curing mould (10) for a tyre, provided with a venting device, implemented in a method for curing a tyre according to one of Claims 1 to 8, comprising a lining (16), the moulding surface (14) of said lining forming protrusions that define cavities (26), vents (38) passing through said lining, each cavity (26) closing on one or more vents (38),
a cavity (26) being divided into a plurality of chambers (40) by at least one protrusion in the form of a blade (26), at least one of said chambers (40) not closing on a vent (36),
at least one duct (42) passing through the blade (26) so that the chamber(s) (40) that does/do not close on a vent (38) communicate(s) through the duct (42) with a chamber (40) that does close on a vent (38),
**characterized in that** the cross-section of the duct (42) has an area of between 0.0001 mm² and 0.25 mm² and, more preferably, 0.01 mm² and 0.1 mm².

11. Method for manufacturing a curing mould (10) for a tyre according to Claim 10, in which:
- the blade (26) is manufactured using a method or combination of methods selected from the following group: removal of material such as laser cutting, plastic deformation such as stamping, or additive manufacturing such as consolidation by selective melting, then
- the duct(s) (42) is/are produced by means of a laser piercing method, and
- the blade (26) is assembled with the body (32) of the lining (16).

12. Method for manufacturing a curing mould (10) for a tyre according to Claim 10, in which:
- the blade (26) is manufactured and the duct(s) (42) is/are produced simultaneously by means of an additive manufacturing method, then
- the blade (26) is assembled with the body (32) of the lining (16).

13. Method for manufacturing a curing mould (10) for a tyre according to Claim 10, in which the body (32) of a lining element is manufactured, the blade (26) is manufactured, and the orifice(s) (42) is/are produced simultaneously by means of an additive manufacturing method.
